# EUROPEAN PATENT APPLICATION

(11) **EP 1 280 226 A1**
(43) Date of publication of application: **29.01.2003**
(21) Application number: 00917401.2
(22) Date of filing: 20.04.2000
(51) Int. Cl.: H01Q 1/24, H04B 1/38, H04B 7/26, H01Q 9/30, H01Q 1/08

(54) **PORTABLE RADIO DEVICE**

(71) Applicant: MITSUBISHI DENKI KABUSHIKI KAISHA, Tokyo 100-8310 (JP)
(72) Inventor: SHOJI, Hideaki, Chiyoda-ku, Tokyo 100-8310 (JP); IMANISHI, Yasuhito, Chiyoda-ku, Tokyo 100-8310 (JP); FUKASAWA, Toru, Chiyoda-ku, Tokyo 100-8310 (JP); OHMINE, Hiroyuki, Chiyoda-ku, Tokyo 100-8310 (JP)
(74) Representative: Sajda, Wolf E., Dipl.-Phys.
(86) International application number: JP0002608
(87) International publication number: WO01082408

(57) **Abstract**

In accordance with the present invention a portable radio (1) includes a casing (2), a cover (3) attached to the casing (2) and opened and closed as desired, an antenna (5) provided in the cover (3), and a power supply means (6) provided to excite the antenna (5). The antenna (5) is formed by providing a notch (4) in a conductive layer incorporated in the cover (3).

## Description

### Technical Field

The present invention relates generally to portable radio or mobile radio sets and particularly to those having a housing (hereinafter referred to as a "cover") opened and closed, as desired, and provided with an antenna.

### Background Art

In Japanese Patent Laying-Open No. 8-186518 an example of a radio communication apparatus is disclosed having a cover opened and closed, as. desired, and provided with an antenna (hereinafter referred to as a "cover antenna").

This cover antenna has first and second components and when the cover is opened the first component is tuned in to an operating frequency of a transmission and reception circuit and when the cover is dosed the second component is tuned in to the operating frequency of the transmission and reception circuit. As such whether the cover is opened or closed the cover antenna can be tuned in to the operation frequency of the transmission and reception circuit.

The radio communication apparatus disclosed in the above document, however, would have a cover provided with two substantial antennas and these antennas that are coupled are a concern as antenna efficiency may be decreased. Furthermore the cover antenna as described above would require two power feed lines which are also difficult to provide as they are required to be provided at a connection (a hinge) of the cover and the housing.

### Disclosure of the Invention

The present invention has been made to overcome the disadvantages as described above. An object of the present invention is to provide a portable radio or mobile radio set having a cover opened and dosed, as desired, and provided with an antenna, wherein provision of a power feed line can be facilitated while reduction of antenna efficiency can be prevented.

The present invention provides a portable radio including: a casing ; a cover attached to the casing and opened and closed as desired; an antenna formed by providing a notch in a conductive layer incorporated in the cover; and power supply or feeding means for exciting the antenna.

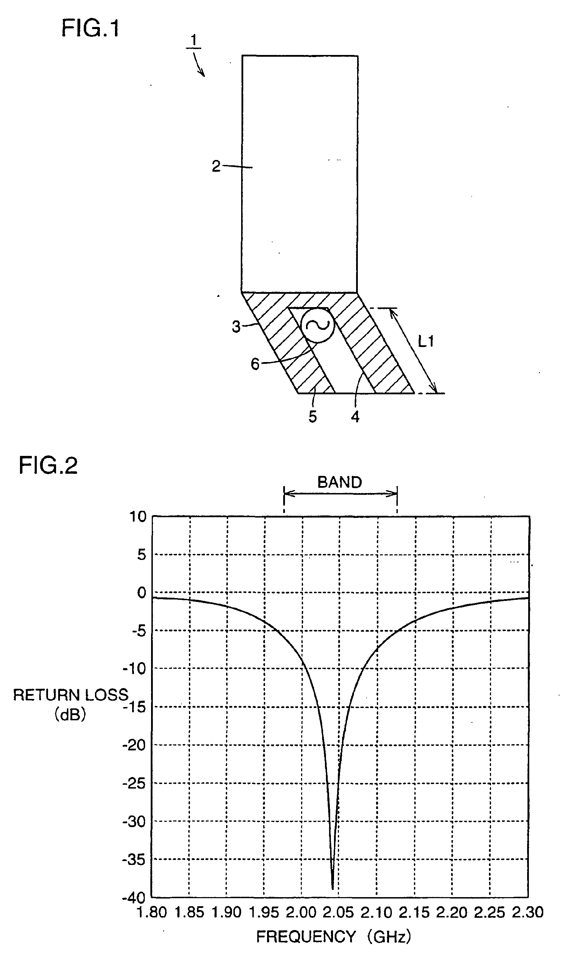

Since the cover can incorporate a conductive layer notched to form an antenna, as described above, even with the cover closed a wide band can be ensured for a return loss of approximately no more than - 6dB, as shown in Fig. 2. As such, whether the cover is opened or closed, a single antenna can be sufficient and it is no longer necessary to provide the cover with two antennas, as conventional. Consequently, reduction of antenna efficiency can be reduced. Since a single antenna suffices a single power feeding line accordingly suffices and it can thus readily be provided.

Preferably the conductive layer is provided substantially throughout the cover and the notch starts from an end of the cover free of a connection to the casing and extends in the cover inwardly.

Furthermore the notch preferably extends in the direction of the length of the casing. This allows a polarized wave to be provided in a direction orthogonal to the direction of the length of the casing to produce vertical polarization in use.

Preferably the notch has a length corresponding to one fourth of a wavelength. Furthermore, preferably the notch as seen lengthwise has one end larger in width than the other end. A further increased band can be provided if the one end of the notch as seen lengthwise is positioned opposite a connection of the cover and the casing or corresponds to a top end of the notch (an end thereof that is opened). Furthermore, if it is positioned closer to the connection of the cover and the casing or closer to a foot of the notch, the notch can be reduced in length.

The notch may at least partially be bent in geometry. This can also reduce the notch in length.

Preferably the casing is provided with a resonator excited by the antenna. The resonator may be a ¼ wavelength resonator having one end with short circuit and the other end with open circuit or a ½ wavelength resonator having opposite ends with open circuit. Furthermore the resonator is preferably positioned to be adjacent to the antenna when the cover is closed.

The present portable radio preferably includes: first and second matching circuits; detection means detecting whether the cover is open or closed; a first switch switching according to a result obtained from the detection means, to connect the first and second matching circuits to the antenna; and a second switch switching according to a result obtained from the detection means, to connect the first and second matching circuits to the power feeding means.

### Brief Description of the Drawings

Fig. 1 schematically shows a configuration of a portable radio in a first embodiment of the present invention.
Fig. 2 represents a relationship between return loss and frequency for the antenna of the Fig. 1 portable radio when the cover is closed.
Fig. 3 schematically shows a configuration of a portable radio in a second embodiment of the present invention.
Fig. 4 represents a relationship between return loss and frequency for the antenna of the Fig. 2 portable radio when the cover is closed.
Fig. 5 schematically shows a configuration of a portable radio in a third embodiment of the present invention.
Fig. 6 schematically shows a configuration of a portable radio in a fourth embodiment of the present invention.
Fig. 7 schematically shows a configuration of a variation of the Fig. 6 portable radio.
Fig. 8A schematically shows a configuration of a portable radio in a fifth embodiment of the present invention.
Fig. 8B shows the Fig. 8A portable radio with the cover closed.
Fig. 9 represents a relationship between return loss and frequency for the antenna of the Fig. 8A portable radio when the cover is closed.
Fig. 10 schematically shows a configuration of a portable radio in a sixth embodiment of the present invention.

### Best Mode for Carrying Out the Invention

Hereinafter the embodiments of the present invention will be described with reference to Figs. 1-10.

### First Embodiment

Fig. 1 schematically shows a configuration of a portable radio or mobile radio set 1, such as a mobile wireless phone, in a first embodiment of the present invention.

As shown in Fig. 1, portable radio 1 includes a casing 2, a cover or flip 3 opened and closed, as desired, an antenna 5 and a power feed means 6.

Cover 3 is formed of dielectric material such as organic polymer and it internally has antenna 5. Antenna 5 is formed by providing a notch 4 in a conductive layer provided to cover 3. The conductive layer is formed for example of metal and it can for example be plated or provided through vapor deposition. In Fig. 1 the conductive layer has a U-letter, planar geometry and it is provided across substantially throughout cover 3.

As shown in Fig. 1, notch 4 extends in a direction of a length of casing 2, extending in cover 3 inwardly starting from an end of cover 3 that is not connected to casing 2. Notch 4 has a length L1 preferably of one forth of a wavelength (^{λ}/₄).

With reference to Fig. 2, since antenna 5 as described above is provided in cover 3, with cover 3 closed a wide bandwidth of approximately 130 MHz is provided for a return loss of no more than - 6dB. Thus, whether cover 3 is opened or closed, a single antenna 5 is sufficient and it is no longer necessary to provide the cover with two antennas, as conventional. This can reduce reduction of antenna efficiency and also reduce the number of power feed lines.

### Second Embodiment

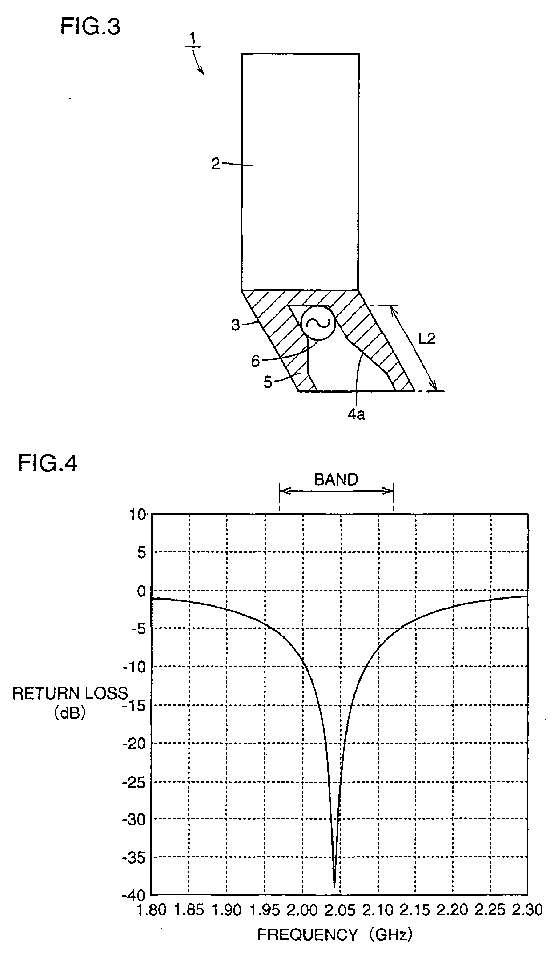

Reference will now be made to Figs. 3 and 4 to describe a second embodiment of the present invention. As shown in Fig. 3, in the second embodiment a notch 4a is different in geometry from notch 4 of the first embodiment. More specifically, notch 4a is wider at an end located opposite a connection of cover 3 and casing 2 (an end moving away from casing 2 when cover is opened). The remainder of the configuration is similar to the Fig. 1 example.

With reference to Fig. 4, notch 4a having an end increased in width results in a further increased bandwidth of approximately 150 MHz for the return loss of no more than - 6dB with cover 3 closed. Thus the present embodiment can provide a further increased bandwidth.

While in the Fig. 3 example notch 4a linearly tapers to have a gradually increasing width it may have any other forms that can permit notch 4a to be larger in width at a top than a bottom or root. Also note that notch 4a has a length L2 for example of λ divided by four.

### Third Embodiment

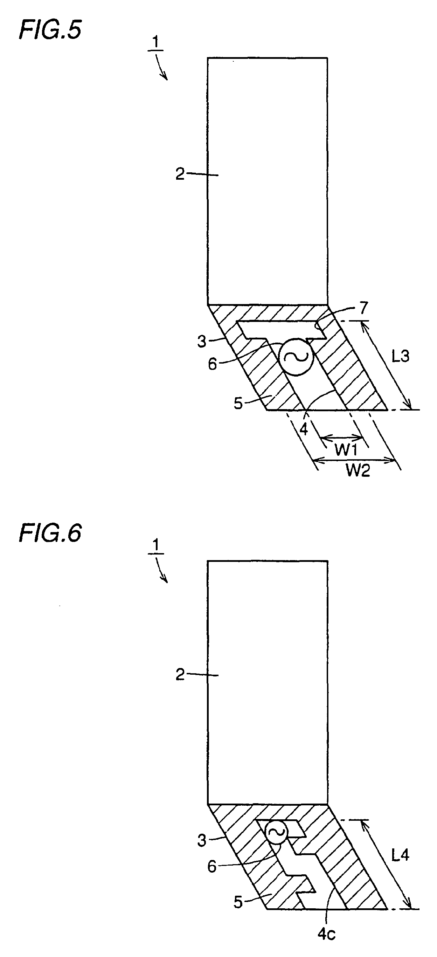

Reference will now be made to Fig. 5 to describe a third embodiment of the present invention. With reference to Fig. 5, in the third embodiment notch 4 has a foot or short circuit 7 located closer to a connection of cover 3 and casing 2 and having a width W2 larger than a width W1 of a portion of notch 4 other than foot 7. The remainder of the configuration is similar to the Fig. 1 example.

Notch 4 has width W1 for example of approximately λ divided by 40 and width W2 preferably of approximately three times width W1 since notch 4 having foot 7 with large width W2 allows notch 4 to be reduced in a length L3 and thus antenna 5 to be compact.

While in the Fig. 5 example foot 7 is rectangular in geometry it may have any geometry selected as desired that has width W2 larger than width W1.

### Fourth Embodiment

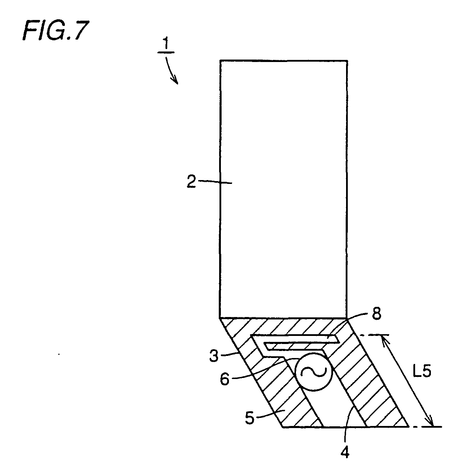

Reference will now be made to Figs. 6 and 7 to describe a fourth embodiment of the present invention and a variation thereof. As shown in Fig. 6, in the fourth embodiment a notch 4c meanders. Alternatively, as shown in Fig. 7, notch 4 may have only a foot 8 meandering. The remainder of the configuration is similar to the Fig. 1 example.

At least partially meandering notch 4, 4c, as described above, can be reduced in lengths L4 and L5 and thus allow antenna 5 to be compact.

### Fifth Embodiment

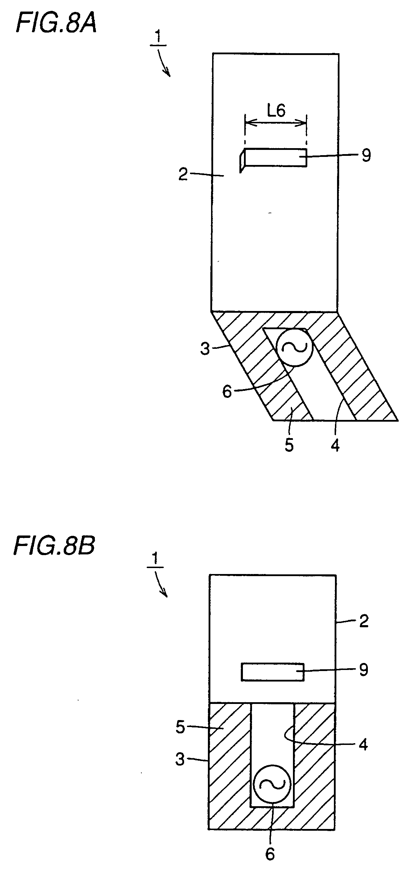

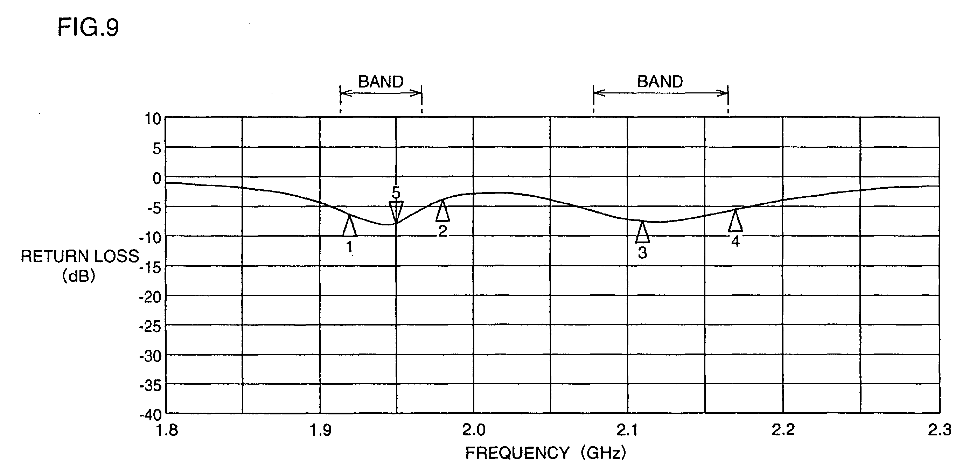

Reference will now be made to Figs. 8A and 8B and 9 to describe a fifth embodiment of the present invention.

As shown in Figs. 8A and 8B, in the fifth embodiment casing 2 is provided with a resonator 9. The remainder of the configuration is similar to the Fig. 1 example.

Resonator 9 is positioned to be adjacent to antenna when cover 3 is closed, and it is excited by antenna 5 contactless.

With reference to Fig. 9, the provision of resonator 9 results in two bands for the return loss of no more than - 6dB. Thus consequently a wide band can be achieved.

As shown in Fig. 8A, resonator 9 may have one end with short circuit and the other end with open circuit to be a ^{λ}/₄ resonator (a resonator having a length L6 of λ divided by four) or it may have opposite ends with open circuit to be a ^{λ}/₂ resonator.

### Sixth Embodiment

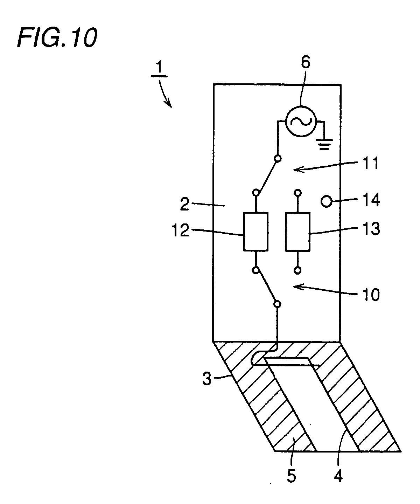

Reference will now be made to Fig. 10 to describe a sixth embodiment of the present invention. As shown in Fig. 10, in the sixth embodiment portable radio 1 includes first and second matching circuits 12 and 13, means 14 for detecting whether cover 3 is open or closed, and first and second switches 10 and 11.

The first matching circuit 12 is connected to antenna 5 when cover 3 is opened. The second matching circuit 13 is connected to antenna 5 when cover 3 is closed. In parallel with the second matching circuit 13 is provided a resonation circuit (not shown).

Means 14 can for example be that as disclosed in Japanese Patent Laying-Open No. 6-291820. A result obtained from mean 14 is referred to to control the first and second switches 10 and 11.

According to a result obtained from means 14 the first switch 10 switches to connect the first and second matching circuits 12 and 13 to antenna 5, as described above. According to a result obtained from mean 14 the second switch 11 switches to connect the first and second matching circuits 12 and 13 to power feeding means 6. That is, when cover 3 is opened the first matching circuit 12 is connected to power feeding means 6 and when cover 3 is closed the second matching circuit 13 is connected to power feeding means 6.

The present invention has been described and illustrated in detail with reference to the embodiments. It may be provided in an appropriate combination of the features of the embodiments. It is clearly understood that the same is by way of illustration and example only and is not to be taken by way of limitation, the spirit and scope of the present invention being limited only by the terms of the appended claims.

### Industrial Applicability

The present invention is usefully applicable to portable radios with a casing provided with a cover or flip opened and closed, as desired, and provided with an antenna.

## Claims

1. A portable radio comprising:
a casing (2);
a cover (3) attached to said casing (2) and opened and closed as desired;
an antenna (5) formed by providing a notch (4) in a conductive layer incorporated in said cover (3); and
power supply means (6) for exciting said antenna (5).

2. The portable radio according to claim 1, wherein:
said conductive layer is provided substantially throughout said cover (3); and
said notch (4) extends from an end of said cover (3) free of a connection to said casing (2).

3. The portable radio according to claim 1, wherein said notch (4) extends in a length direction of said casing (2).

4. The portable radio according to claim 1, wherein said notch (4) has a length (L1) corresponding to one fourth of a wavelength.

5. The portable radio according to claim 1, wherein said notch (4) as seen lengthwise has one end larger in width than the other end.

6. The portable radio according to claim 5, wherein said notch (4) has said one end positioned opposite a connection of said cover (3) and said casing (2).

7. The portable radio according to claim 5, wherein said notch (4) has said end positioned closer to a connection of said cover (3) and said casing (2).

8. The portable radio according to claim 1, wherein said notch (4) is at least partially bent in geometry.

9. The portable radio according to claim 1, wherein said casing (2) is provided with a resonator (9) excited by said antenna (5).

10. The portable radio according to claim 9, wherein said resonator (9) includes a ¼ wavelength resonator having one end with short circuit and the other end with open circuit.

11. The portable radio according to claim 9, wherein said resonator (9) includes a ½ wavelength resonator having opposite ends with open circuit.

12. The portable radio according to claim 9, wherein said resonator (9) is positioned to be adjacent to said antenna (5) when said cover (3) is closed.

13. The mobile radio set according to claim 1, comprising:
first and second matching circuits (12, 13);
detection means (14) detecting whether said cover (3) is open or closed;
a first switch (10) switching according to a result obtained from said detection means (14), to connect said first and second matching circuits (12, 13) to said antenna (5); and
a second switch (11) switching according to a result obtained from said detection means (14), to connect said first and second matching circuits (12, 13) to said power supply means (6).
